# EUROPEAN PATENT SPECIFICATION

(11) **EP 4 029 697 B1**
(45) Date of publication and mention of the grant of the patent: **31.07.2024**
(21) Application number: 21216278.8
(22) Date of filing: 21.12.2021
(51) Int. Cl.: B41J 2/21, G06N 3/08, B41J 11/00, B41J 15/16

(54) **ESTIMATION METHOD, PRINTING METHOD AND PRINTING APPARATUS**
SCHÄTZVERFAHREN, DRUCKVERFAHREN UND DRUCKVORRICHTUNG
PROCÉDÉ D'ESTIMATION, PROCÉDÉ D'IMPRESSION ET IMPRIMANTE

(30) Priority: 19.01.2021 JP 2021006154
(43) Date of publication of application: 20.07.2022
(73) Proprietor: SCREEN Holdings Co., Ltd., Kyoto-shi, Kyoto 602-8585 (JP)
(72) Inventor: NAKAJIMA, Shun, KYOTO-SHI, Kyoto 602-8585 (JP); KIMURA, Tomoharu, KYOTO-SHI, Kyoto 602-8585 (JP); OKAMOTO, Satoshi, KYOTO-SHI, Kyoto 602-8585 (JP); KIMURA, Takaya, KYOTO-SHI, Kyoto 602-8585 (JP); SARUWATARI, Takeshi, KYOTO-SHI, Kyoto 602-8585 (JP)
(74) Representative: Kilian Kilian & Partner mbB

(56) References cited:
- US-A1- 2008 198 195
- US-A1- 2020 307 279
- US-A1- 2021 014 379

## Description

### BACKGROUND OF THE INVENTION

### Field of the Invention

The present invention relates to a technique for estimating the expansion/contraction state of an elongated strip-shaped base material in a printing apparatus that ejects ink onto a surface of the base material while transporting the base material in a longitudinal direction thereof.

### Description of the Background Art

An inkjet printing apparatus for printing an image on an elongated strip-shaped base material by ejecting ink from a plurality of heads while transporting the base material in a longitudinal direction thereof has heretofore been known. The inkjet printing apparatus ejects inks of different colors from the respective heads. Then, the inkjet printing apparatus prints a multi-color image on a surface of the base material by superimposing single-color images formed by the respective inks of the different colors. Such a conventional printing apparatus is disclosed, for example, in Japanese Patent Application Laid-Open No. 2004-268361.

In the printing apparatus of this type, the base material expands or contracts slightly when the base material absorbs the inks or when the inks on the base material become dry. As a result, a printed image formed on the surface of the base material is distorted. Also, there are cases in which the position of the inks ejected from the heads is improper due to the expansion and contraction of the base material. In conventional techniques, various parameters for the printing apparatus have been set to minimize the degradation in print quality resulting from the expansion and contraction of the base material.

Unfortunately, the amount of expansion/contraction of the base material varies depending on various conditions such as the tension applied to the base material, the type of base material, and the type of ink. In addition, there are cases in which the amount of expansion/contraction of the base material varies between printing apparatuses of the same type due to differences between machines. For these reasons, it has been difficult to set the aforementioned parameters uniquely. Also, the expansion/contraction state of the base material, which varies depending on image data to be printed, cannot be known prior to printing in conventional techniques.

US 2020/307279 A1 discloses a method implemented in a duplex printer for determining a model parameter for predicting a shrinkage of a media sheet after printing the front side. In concrete, the shrinkage of the media sheet after the front side has been printed is measured based on an outer contour of the media sheet and an outer contour of the printed front side image. The corresponding contours are obtained by a scanner. In a next step, based on the shrinking resulting from printing the front side image, a printing position of a back side image is adjusted without adjusting the printing position of the front side image. Further prior documents are US 2021 /014379 A1 and US 2021 /014379 A1.

### SUMMARY OF THE INVENTION

In view of the foregoing, it is therefore an object of the present invention to provide a technique capable of estimating the expansion/contraction state of a base material in accordance with submitted data prior to printing. This object is achieved by the subject-matters of independent claims 1 and 10. Preferred embodiments are subject-matters of the dependent claims. The invention is as defined in the claims, wherein aspects of the invention are set out below.

A first aspect of the present invention is intended for a method of estimating the expansion/contraction state of an elongated strip-shaped base material in a printing apparatus that ejects ink onto a surface of the base material while transporting the base material in a longitudinal direction thereof. According to the first aspect of the present invention, the method comprises: a) a data acquisition step for acquiring submitted data that is image data to be printed; and b) an estimation step for outputting an estimation result indicating the expansion/contraction state of the base material resulting from ink, based on the submitted data, prior to printing of the submitted data.

A second aspect of the present invention is intended for the method of the first aspect, which further comprises c) a learning step for generating an estimation model that is able to estimate the expansion/contraction state of the base material by means of machine learning using learning data that is image data for learning as an input variable and the expansion/contraction state of the base material at the time of printing of the learning data in the printing apparatus as teacher data, wherein the submitted data is inputted to the estimation model, and the expansion/contraction state outputted from the estimation model is used as the estimation result in the estimation step (the step b)).

A third aspect of the present invention is intended for the method of the second aspect, wherein the learning data in the step c) is image data in which a plurality of marks arranged in spaced apart relation are incorporated, and wherein the expansion/contraction state that becomes the teacher data is measured in the learning step (the step c)) based on the positions of the marks on the base material at the time of printing of the learning data in the printing apparatus.

A fourth aspect of the present invention is intended for the method of the third aspect, wherein each of the marks includes: a base figure of a first color; and a mark figure of a second color different from the first color, the mark figure being in a position overlaid on the base figure.

A fifth aspect of the present invention is intended for the method of the fourth aspect, wherein the first color is white, and the second color is black.

A sixth aspect of the present invention is intended for the method of any one of the third to fifth aspects, wherein the teacher data indicates a change in distance between adjacent ones of the marks.

A seventh aspect of the present invention is intended for the method of any one of the third to fifth aspects, wherein the teacher data indicates the amount of displacement of each of the marks.

An eighth aspect of the present invention is intended for the method of any one of the second to seventh aspects, wherein the learning data is image data including a plurality of regions different in density value or coverage rate.

A ninth aspect of the present invention is intended for a method of printing using the estimation method as recited in any one of the first to eighth aspects. According to the ninth aspect of the present invention, the method further comprises d) a printing step for ejecting ink onto the surface of the base material while correcting the ejection position of ink onto the base material, based on the estimation result, the step d) being performed after the data acquisition step (the step a)) and the estimation step (the step b)).

A tenth aspect of the present invention is intended for a printing apparatus, which comprises: a data acquisition part for acquiring submitted data that is image data to be printed; a transport mechanism for transporting an elongated strip-shaped base material along a predetermined transport path in a longitudinal direction thereof; a head for ejecting ink onto a surface of the base material being transported by the transport mechanism, based on the submitted data; and an estimation part for outputting an estimation result indicating the expansion/contraction state of the base material resulting from the ink, based on the submitted data, prior to printing of the submitted data.

An eleventh aspect of the present invention is intended for the printing apparatus of the tenth aspect, which further comprises: a camera for photographing a printing surface of the base material in a position downstream from the head along the transport path; an expansion/contraction state measurement part for measuring the expansion/contraction state of the base material, based on a photographic image from the camera; and a learning part for generating an estimation model that is able to estimate the expansion/contraction state of the base material by means of machine learning using learning data that is image data for learning as an input variable and the expansion/contraction state at the time of printing of the learning data as teacher data, wherein the estimation part inputs the submitted data to the estimation model, and uses the expansion/contraction state outputted from the estimation model as the estimation result.

A twelfth aspect of the present invention is intended for the printing apparatus of the tenth or eleventh aspect, which further comprises: a correction value calculation part for calculating a correction value, based on the estimation result; and an operation control part for controlling the transport mechanism and the head so as to eject the ink onto the surface of the base material while correcting the ejection position of the ink onto the base material, based on the correction value.

According to the first to twelfth aspects of the present invention, the expansion/contraction state of the base material resulting from the ink is estimated, based on the submitted data, prior to the printing. This provides the estimation result of the expansion/contraction state in accordance with the submitted data. Thus, the submitted data is printed in consideration of the estimation result of the expansion/contraction state.

In particular, according to the second and eleventh aspects of the present invention, the use of the machine learning makes it easy to respond to changes in conditions, as compared with the process of calculating the estimation result of the expansion/contraction state based on a formula or table indicating a relationship between the image data and the expansion/contraction state.

In particular, according to the third aspect of the present invention, the plurality of marks incorporated in the learning data make it easy to obtain the expansion/contraction state of the base material that becomes the teacher data.

In particular, according to the fourth aspect of the present invention, the mark figure is recognizable regardless of the color of the image serving as a background.

In particular, according to the sixth aspect of the present invention, the teacher data represents the local amount of expansion/contraction for each region. The teacher data, which does not represent the accumulated amount of displacement, is easy to handle in the machine learning.

In particular, according to the seventh aspect of the present invention, the teacher data represents changes in coordinate position of each portion of the base material. In this case, the estimation result outputted from the estimation model also represents changes in coordinate position of each portion of the base material. Thus, the coordinate position of the ink for ejection onto the base material is easily corrected based on the estimation result.

In particular, according to the eighth aspect of the present invention, the amount of expansion/contraction of the base material in accordance with the density value or the coverage rate is learned.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram showing a configuration of a printing apparatus;
Fig. 2 is a partial top view of the printing apparatus in the vicinity of a printing part;
Fig. 3 is a block diagram showing connections between components of the printing apparatus and a computer;
Fig. 4 is a block diagram conceptually showing functions of the computer;
Fig. 5 is a flow diagram showing a procedure for a learning process;
Fig. 6 is a view showing an example of learning data;
Fig. 7 is an enlarged view of one part of the learning data;
Fig. 8 is a view showing an example of a method of measuring the expansion/contraction state of a base material;
Fig. 9 is a view showing another example of the method of measuring the expansion/contraction state of the base material; and
Fig. 10 is a flow diagram showing a procedure for a printing process.

### DESCRIPTION OF THE PREFERRED EMBODIMENTS

A preferred embodiment according to the present invention will now be described with reference to the drawings.

### <1. Configuration of Printing Apparatus>

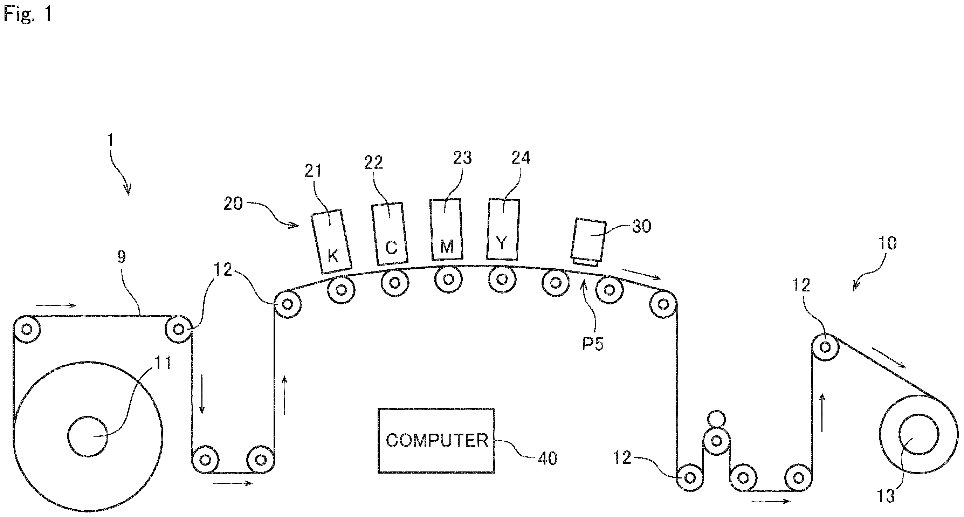

Fig. 1 is a diagram showing a configuration of a printing apparatus 1 according to a preferred embodiment of the present invention. The printing apparatus 1 is an apparatus for printing an image on a surface of an elongated strip-shaped base material 9 by ejecting ink droplets from a plurality of heads 21 to 24 toward the base material 9 while transporting the base material 9. The base material 9 may be printing paper or a resin film. The base material 9 may also be metal foil or a glass base material. As shown in Fig. 1, the printing apparatus 1 includes a transport mechanism 10, a printing part 20, a camera 30, and a computer 40.

The transport mechanism 10 is a mechanism for transporting the base material 9 in a transport direction extending along the length of the base material 9. The transport mechanism 10 of the present preferred embodiment includes an unwinder 11, a plurality of transport rollers 12, and a winder 13. The base material 9 is unwound from the unwinder 11, and is transported along a transport path formed by the transport rollers 12. Each of the transport rollers 12 rotates about an axis extending in a direction perpendicular to the transport direction to guide the base material 9 downstream along the transport path. The transported base material 9 is wound and collected on the winder 13. The base material 9 is tensioned in the transport direction. This suppresses slack and wrinkles in the base material 9 during the transport.

The printing part 20 is a processing part for ejecting droplets of inks (ink droplets) toward the base material 9 being transported by the transport mechanism 10. The printing part 20 of the present preferred embodiment includes a first head 21, a second head 22, a third head 23, and a fourth head 24. The first head 21, the second head 22, the third head 23, and the fourth head 24 are arranged in spaced apart relation in the transport direction of the base material 9. The base material 9 is transported under the four heads 21 to 24, with a printing surface thereof facing upward.

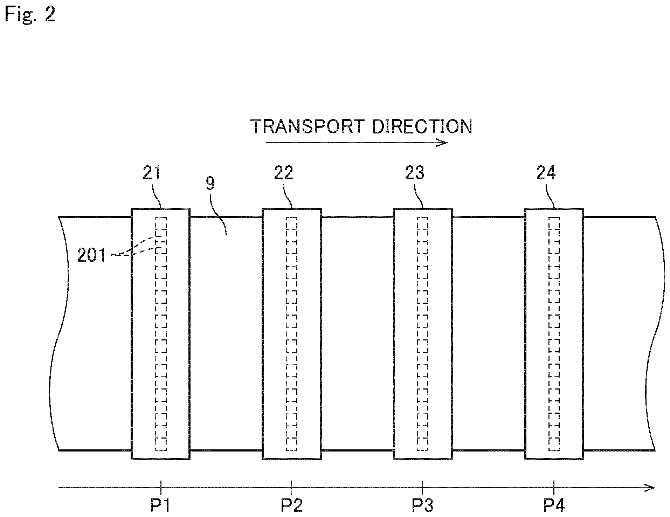

Fig. 2 is a partial top view of the printing apparatus 1 in the vicinity of the printing part 20. As indicated by broken lines in Fig. 2, each of the heads 21 to 24 has a lower surface provided with a plurality of nozzles 201 arranged parallel to the width direction of the base material 9. The first, second, third, and fourth heads 21, 22, 23, and 24 eject ink droplets of four colors, i.e., K (black), C (cyan), M (magenta), and Y (yellow), respectively, which serve as color components of a multi-color image from the nozzles 201 toward an upper surface of the base material 9.

The first head 21 ejects K-color ink droplets toward the upper surface of the base material 9 in a first printing position P1 lying on the transport path. The second head 22 ejects C-color ink droplets toward the upper surface of the base material 9 in a second printing position P2. The second printing position P2 is downstream from the first printing position P1. The third head 23 ejects M-color ink droplets toward the upper surface of the base material 9 in a third printing position P3. The third printing position P3 is downstream from the second printing position P2. The fourth head 24 ejects Y-color ink droplets toward the upper surface of the base material 9 in a fourth printing position P4. The fourth printing position P4 is downstream from the third printing position P3.

A fixing part for fixing the inks on the printing surface of the base material 9 may be further provided downstream of the heads 21 to 24 as seen in the transport direction. The fixing part, for example, blows a heated gas toward the base material 9 to dry the inks adhering to the base material 9. The fixing part may be of the type which irradiates UV-curable inks with UV light to cure the inks.

The camera 30 is an imaging device for photographing the printing surface of the base material 9 having passed the printing part 20. The camera 30 is disposed in opposed relation to the printing surface of the base material 9 in a photographing position P5 downstream from the four heads 21 to 24 along the transport path. For example, a line sensor including a plurality of imaging elements, such as CCD, CMOS, and other imaging elements, arranged in the width direction is used as the camera 30. The camera 30 photographs the printing surface of the base material 9 to thereby acquire a photographic image. Then, the camera 30 sends the acquired photographic image to the computer 40.

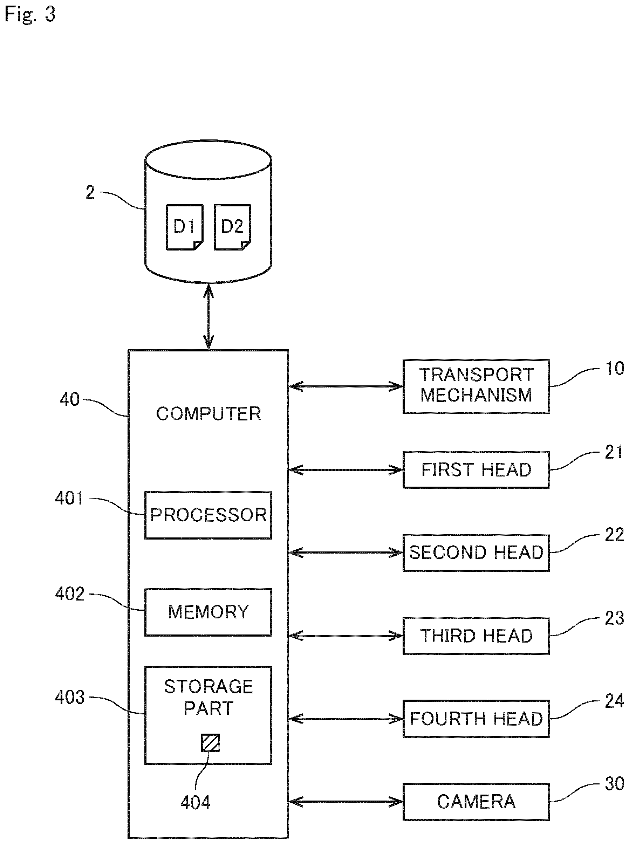

The computer 40 is an information processing device for controlling the printing apparatus 1. Fig. 3 is a block diagram showing connections between the computer 40 and the components of the printing apparatus 1. As conceptually shown in Fig. 3, the computer 40 includes a processor 401 such as a CPU, a memory 402 such as a RAM, and a storage part 403 such as a hard disk drive. A computer program 404 for execution of a learning process and a printing process to be described later is stored in the storage part 403.

As shown in Fig. 3, the computer 40 is connected to the transport mechanism 10, the four heads 21 to 24, and the camera 30 for communication therewith. The computer 40 is also connected to a server 2 that is an external storage device for communication therewith. Submitted data D1 is stored in the server 2. The submitted data D1 is image data to be printed in the printing apparatus 1 for obtainment of a printed product. The computer 40 acquires the submitted data D 1 from the server 2, and controls the operations of the transport mechanism 10 and the four heads 21 to 24, based on the submitted data D1. Thus, the printing process in the printing apparatus 1 proceeds. A large number of learning data D2 for use in the learning process to be described later are also stored in the server 2.

### <2. Functions of Computer>

In this printing apparatus 1, each of the four heads 21 to 24 ejects ink droplets to thereby print a single-color image on the upper surface of the base material 9. A multi-color image is formed on the upper surface of the base material 9 by superimposing the four single-color images. If the ink droplets ejected from the four heads 21 to 24 are out of position relative to each other on the base material 9, the image quality of a printed product is lowered. Controlling such misalignment (misregistration) between the single-color images on the base material 9 within an allowable range is an important factor for obtainment of high-quality printed products.

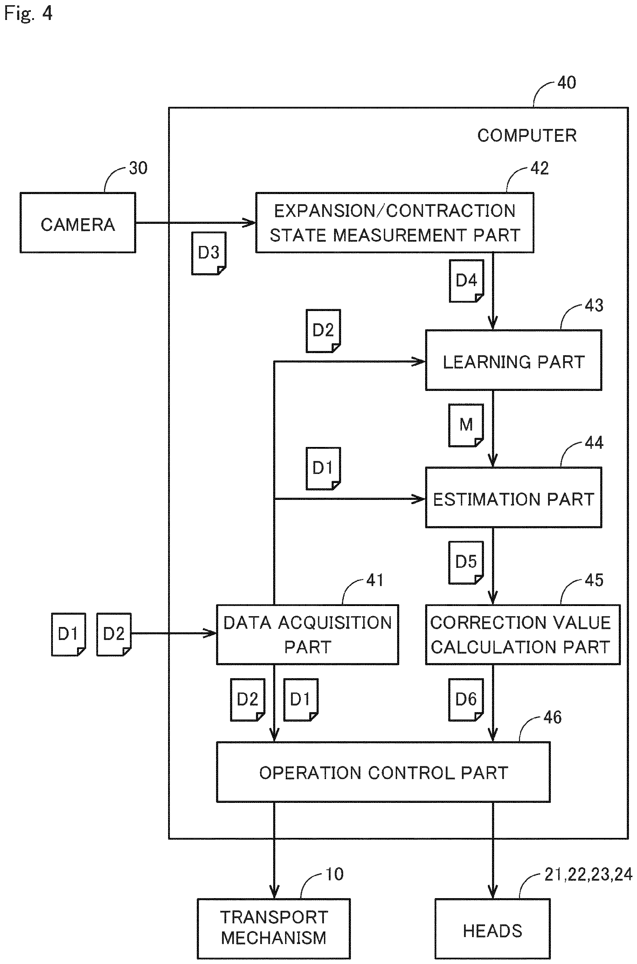

The base material 9 expands and contracts non-uniformly when the inks are absorbed by the base material 9 or when the inks on the base material 9 become dry. The occurrence of such expansion and contraction of the base material 9 distorts a printed image formed on the printing surface. The occurrence of such expansion and contraction of the base material 9 also makes the aforementioned misregistration prone to occur. To overcome these disadvantages, the computer 40 of the printing apparatus 1 has the function of estimating the expansion/contraction state of the base material 9 prior to printing based on the submitted data D1 to perform printing while correcting the ejection positions of the ink droplets through the use of the estimation result. Fig. 4 is a block diagram conceptually showing functions of the computer 40.

As shown in Fig. 4, the computer 40 includes a data acquisition part 41, an expansion/contraction state measurement part 42, a learning part 43, an estimation part 44, a correction value calculation part 45, and an operation control part 46. Functions of the data acquisition part 41, the expansion/contraction state measurement part 42, the learning part 43, the estimation part 44, the correction value calculation part 45, and the operation control part 46 are implemented by the processor 401 of the computer 40 operating in accordance with the computer program 404.

The data acquisition part 41 is a processing part for acquiring the submitted data D1 and the learning data D2. The data acquisition part 41 reads the submitted data D1 and the learning data D2 from the server 2. The data acquisition part 41 inputs the read learning data D2 to the learning part 43 and the operation control part 46. The data acquisition part 41 also inputs the read submitted data D1 to the estimation part 44 and the operation control part 46.

The expansion/contraction state measurement part 42 is a processing part for measuring the expansion/contraction state of the base material 9, based on a photographic image D3 sent from the camera 30. A method of measuring the expansion/contraction state of the base material 9 will be described later. The expansion/contraction state measurement part 42 inputs a measured expansion/contraction state D4 of the base material 9 to the learning part 43.

The learning part 43 is a processing part for learning a relationship between image data and the expansion/contraction state of the base material 9 which will result when the image data is printed. This printing apparatus 1 performs the learning process by means of the learning part 43 prior to the printing of the submitted data D1 for obtainment of a printed product. During the learning process, the learning data D2 is inputted to the aforementioned operation control part 46 and the learning part 43. The operation control part 46 controls the operations of the transport mechanism 10 and the printing part 20, based on the learning data D2. Thus, the learning data D2 is printed on the printing surface of the base material 9. During the learning process, the camera 30 photographs the base material 9 subjected to the printing.

The learning part 43 uses the learning data D2 as an input variable and the expansion/contraction state D4 measured by the expansion/contraction state measurement part 42 as teacher data to perform the learning process by means of a supervised machine learning algorithm. The learning part 43 repeats such a learning process until a predetermined termination condition is satisfied. Thus, the learning part 43 generates an estimation model M. The estimation model M outputs an estimation result indicating the expansion/contraction state of the base material 9, based on the inputted image data. The details on the learning process will be described later.

The learning part 43 uses, for example, deep learning (a multi-layer neural network) as the machine learning algorithm. However, the machine learning algorithm used by the learning part 43 is not limited to the deep learning. Other machine learning algorithms such as Markov random fields (MRFs) and Boltzmann machines may be used in place of the deep learning.

The estimation part 44 is a processing part for estimating the expansion/contraction state of the base material 9 which will result when the submitted data D1 is printed, based on the submitted data D1. The estimation part 44 uses the estimation model M generated by the learning part 43 to perform an estimation process. The estimation part 44 inputs the submitted data D1 acquired by the data acquisition part 41 to the estimation model M. Then, the expansion/contraction state of the base material 9 corresponding to the submitted data D1 is outputted from the estimation model M. The estimation part 44 uses the expansion/contraction state outputted from the estimation model M as an estimation result D5.

The correction value calculation part 45 is a processing part for calculating a correction value D6, based on the estimation result D5. The correction value calculation part 45 calculates the correction value D6 in a direction for canceling the amount of expansion/contraction of the base material 9 indicated by the estimation result D5. The calculated correction value D6 is inputted to the operation control part 46.

The operation control part 46 is a processing part for controlling the operations of the transport mechanism 10 and the four heads 21 to 24. When printing the aforementioned learning data D2, the operation control part 46 outputs a command value based on the learning data D2 to the transport mechanism 10 and the four heads 21 to 24. Thus, the operation control part 46 brings the transport mechanism 10 and the four heads 21 to 24 into operation to print the learning data D2 on the printing surface of the base material 9. When printing the submitted data D1, on the other hand, the operation control part 46 corrects a command value based on the submitted data D1 with the use of the correction value D6. Then, the operation control part 46 outputs the corrected command value to the transport mechanism 10 and the four heads 21 to 24. Thus, the operation control part 46 brings the transport mechanism 10 and the four heads 21 to 24 into operation to correct and print the submitted data D1 on the printing surface of the base material 9.

### <3. Learning Process>

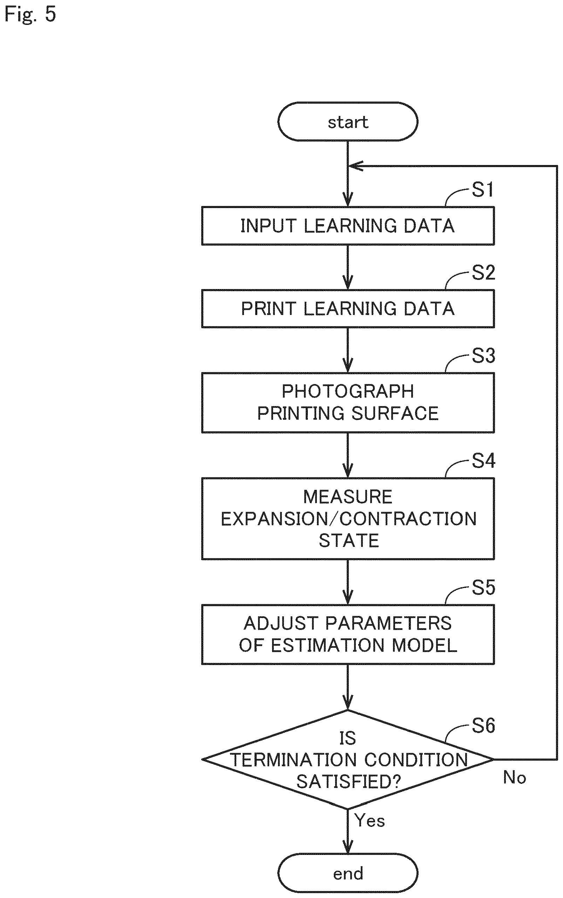

Next, the learning process for execution in the aforementioned printing apparatus 1 will be described. Fig. 5 is a flow diagram showing a procedure for the learning process. This learning process is performed prior to the printing of the submitted data D1 for obtainment of a printed product.

For the learning process, the data acquisition part 41 initially reads the learning data D2 from the server 2, as shown in Fig. 5. Then, the data acquisition part 41 inputs the learning data D2 to the learning part 43 and the operation control part 46 (Step S1).

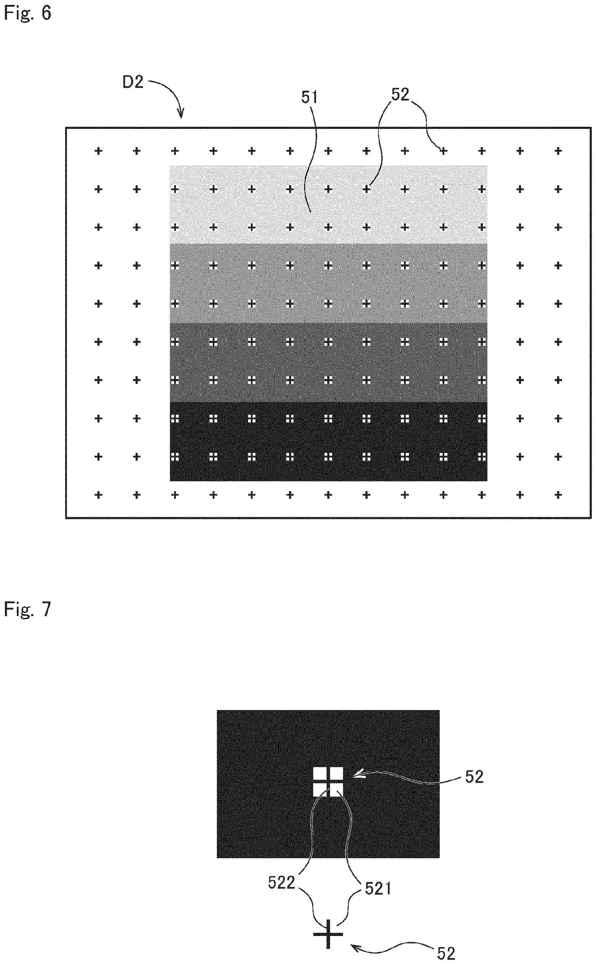

Fig. 6 is a view showing an example of the learning data D2. As shown in Fig. 6, the learning data D2 is image data in which a plurality of grid marks 52 are incorporated in an image 51 such as a picture or a pattern. The multiple learning data D2 have respective images 51 different from each other. The amount of expansion/contraction of the base material 9 varies depending on the amounts of inks ejected onto the base material 9. It is hence desirable that the image 51 of the learning data D2 is an image including a plurality of regions different in density value or coverage rate. This allows the learning of the amount of expansion/contraction of the base material 9 in accordance with the density value or the coverage rate.

Each of the grid marks 52 is a mark indicating a predetermined coordinate position in the learning data D2. The grid marks 52 are arranged over the entire learning data D2. The grid marks 52 are also arranged in spaced apart relation in the transport direction and the width direction of the base material 9. In the learning data D2, the grid marks 52 are disposed on the front side of the image 51.

Fig. 7 is an enlarged view of one part of the learning data D2. As shown in Fig. 7, such a grid mark 52 of the present preferred embodiment is comprised of a base figure 521 and a mark figure 522. The base figure 521 is a rectangular figure filled in with white (0% density value). The mark figure 522 is a black (100% density value) cross-shaped figure overlaid on the front side of the base figure 521. In an upper region of Fig. 7, the grid mark 52 is placed on a black background. In such a case, the mark figure 522 is recognizable because the mark figure 522 is on the white base figure 521 while the background and the mark figure 522 are of the same black color. In a lower region of Fig. 7, the grid mark 52 is placed on a white background. In such a case, a boundary between the base figure 521 and the background which are of the same white color is not recognizable, but the black mark figure 522 is recognizable.

In the present preferred embodiment, the grid mark 52 is comprised of the white base figure 521 and the black mark figure 522 that is overlaid on the front side of the base figure 521 in this manner. This makes the mark figure 522 recognizable regardless of the color of the image 51 serving as the background.

After Step S1, the operation control part 46 controls the operations of the transport mechanism 10 and the four heads 21 to 24, based on the learning data D2. This prints the learning data D2 on the printing surface of the base material 9 (Step S2). Specifically, the plurality of grid marks 52 together with the image 51 are printed on the printing surface of the base material 9. Also, the camera 30 photographs the printing surface of the base material 9 on which the learning data D2 is printed (Step S3). The photographic image D3 obtained by the photographing is sent from the camera 30 to the computer 40 and inputted to the expansion/contraction state measurement part 42.

The expansion/contraction state measurement part 42 measures the expansion/contraction state of the base material 9, based on the photographic image D3 sent from the camera 30 (Step S4). Specifically, the expansion/contraction state measurement part 42 extracts the positions of the grid marks 52 on the base material 9 from the photographic image D3. Then, the expansion/contraction state measurement part 42 measures the expansion/contraction state of the base material 9, based on the positions of the grid marks 52. As mentioned above, each of the grid marks 52 is comprised of the white base figure 521 and the black mark figure 522. This makes the positions of all of the grid marks 52 recognizable regardless of the color and density of the image 51 serving as the background. Thus, the expansion/contraction state of the base material 9 is measured with accuracy.

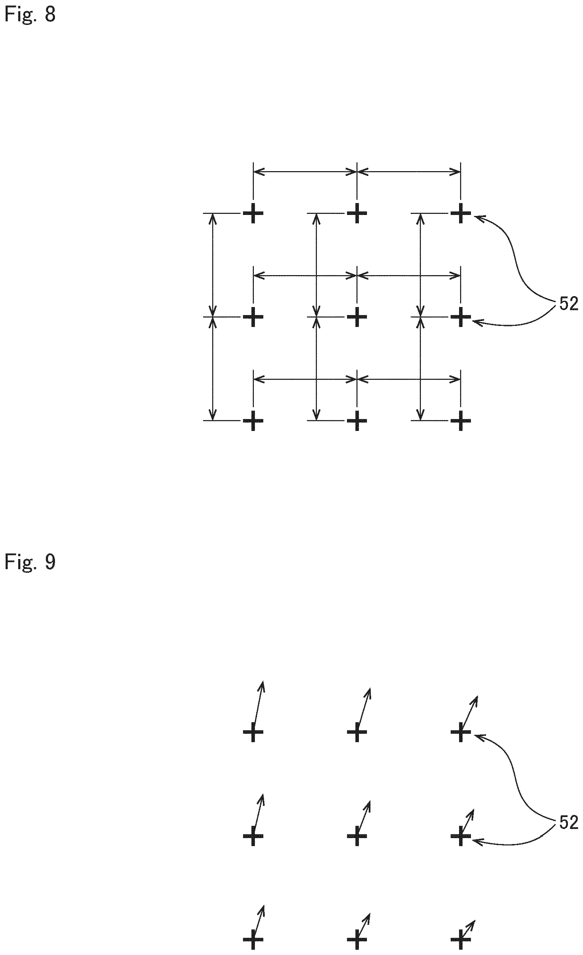

Fig. 8 is a view showing an example of a method of measuring the expansion/contraction state of the base material 9. In the example of Fig. 8, the expansion/contraction state measurement part 42 measures a distance between adjacent ones of the grid marks 52 in the photographic image D3. Then, the expansion/contraction state measurement part 42 calculates a difference between the measured distance between the grid marks 52 and the distance between the grid marks 52 in the learning data D2 as the amount of expansion/contraction. In other words, a change in the distance between the adjacent grid marks 52 is measured as the amount of expansion/contraction in the method of Fig. 8. The expansion/contraction state measurement part 42 performs such a measurement of the amount of expansion/contraction for all of the adjacent grid marks 52 in the photographic image D3. As a result, a heat map showing a distribution of the amounts of expansion/contraction on the base material 9 is provided.

When the base material 9 expands or contracts, the amount of displacement of each region on the base material 9 is influenced not only by the amount of expansion/contraction of that region but also by the amount of expansion/contraction of other regions, and becomes the accumulation value of these amounts of expansion/contraction. However, the heat map provided by the measurement method of Fig. 8 represents the local amount of expansion/contraction for each region of the base material 9. Thus, this heat map is easy to handle as teacher data in Step S5 to be described below.

Fig. 9 is a view showing another example of the method of measuring the expansion/contraction state of the base material 9. In the example of Fig. 9, the expansion/contraction state measurement part 42 measures the position of each of the grid marks 52 in the photographic image D3. Specifically, the expansion/contraction state measurement part 42 uses a specific grid mark 52 in the photographic image D3 as an origin to measure the coordinate position of each of the remaining grid marks 52 with respect to the origin. Then, the expansion/contraction state measurement part 42 calculates a difference between the measured coordinate position and the coordinate position of each of the grid marks 52 in the learning data D2 as the amount of expansion/contraction. In other words, the amount of displacement of each of the grid marks 52 on the base material 9 is measured as the amount of expansion/contraction in the method of Fig. 9. The expansion/contraction state measurement part 42 performs such a measurement of the amount of expansion/contraction for all of the grid marks 52 in the photographic image D3. As a result, a vector map showing a distribution of the amounts of expansion/contraction on the base material 9 is provided.

The vector map provided by the measurement method of Fig. 9 represents the amount of displacement of the coordinate position of each portion of the base material 9. In this case, the estimation result outputted from the estimation model M to be described later also represents the amount of displacement of the coordinate position of each portion of the base material 9. Thus, the use of the measurement method of Fig. 9 makes it easy to use the estimation result during the correction of the coordinate positions of the inks for ejection onto the base material 9 in the correction value calculation part 45.

The expansion/contraction state measurement part 42 inputs the provided heat map or vector map as the expansion/contraction state D4 of the base material 9 to the learning part 43.

Subsequently, the learning part 43 uses the learning data D2 inputted from the data acquisition part 41 in Step S1 as an input variable and the expansion/contraction state D4 of the base material 9 measured in Step S4 as teacher data to perform machine learning using a supervised machine learning program. In this process, the learning part 43 prepares the estimation model M for estimating the expansion/contraction state of the base material 9, based on the image data. The estimation model M outputs the estimation result of the expansion/contraction state, based on the inputted learning data D2. The learning part 43 adjusts parameters of the estimation model M so that the estimation result outputted from the estimation model M is closer to the expansion/contraction state D4 that is the teacher data (Step S5; a learning process).

Thereafter, the learning part 43 judges whether a predetermined termination condition is satisfied or not (Step S6). The termination condition may be, for example, that a difference between the estimation result and the teacher data is less than a preset threshold value. Alternatively, the termination condition may be that the number of repetitions of Steps S 1 to S5 reaches a preset threshold value. If the termination condition is not satisfied (No in Step S6), the computer 40 repeats the process of Steps S1 to S5 described above. At this time, the learning data D2 may be that from a different image 51.

The estimation accuracy of the estimation model M is improved by repeating the learning process of Steps S1 to S5. Then, when the termination condition is satisfied (Yes in Step S6), the learning part 43 terminates the learning process. This generates a learned estimation model M with high estimation accuracy. In other words, the learned estimation model M is able to accurately estimate the expansion/contraction state of the base material 9 which will result when the inputted image data is printed, based on the inputted image data. The learning part 43 provides the generated estimation model M to the estimation part 44.

A predetermined number of learning data D2 may be used as a single learning data set. Then, the learning process may be performed on a plurality of learning data sets. In this case, while a predetermined number of learning data D2 included in the single learning data set are printed, the process of Steps S1 to S5 may be repeated without judging the termination condition in Step S6. Then, when the process of Steps S1 to S5 is completed for all of the learning data D2 included in the single learning data set, the judgment of the termination condition in Step S6 may be made. If the termination condition is not satisfied in Step S6, the learning process of Steps S1 to S5 may be performed on another learning data set.

### <4. Printing Process>

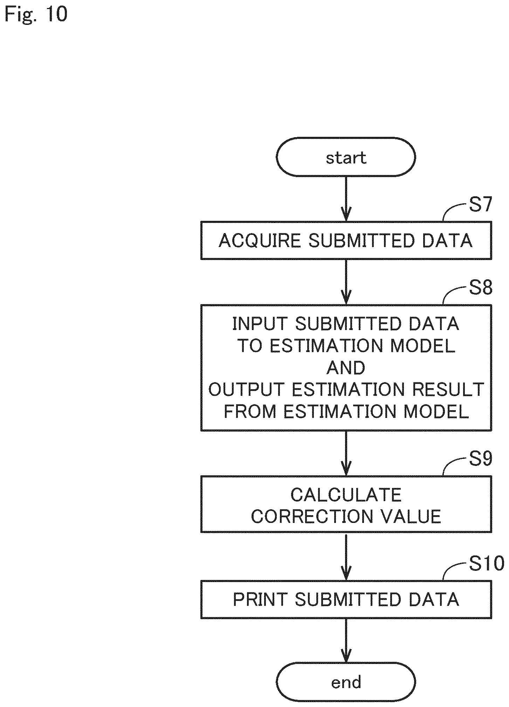

Next, the printing process for execution in the printing apparatus 1 will be described. The printing process is performed after the aforementioned learning process. Fig. 10 is a flow diagram showing a procedure for the printing process.

For the printing process, the submitted data D1 to be printed is initially acquired (Step S7; a data acquisition step), as shown in Fig. 10. Specifically, the data acquisition part 41 reads the submitted data D1 from the server 2. Then, the data acquisition part 41 inputs the submitted data D1 to the estimation part 44 and the operation control part 46.

The estimation part 44 inputs the submitted data D 1 to the estimation model M generated by the learning part 43. Then, the estimation model M outputs the estimation result D5 of the expansion/contraction state of the base material 9 (Step S8; an estimation step). The estimation result D5 indicates an estimated value of the expansion/contraction state of the base material 9 resulting from inks when the submitted data D1 is printed in the printing apparatus 1. The estimation part 44 outputs the obtained estimation result D5 to the correction value calculation part 45.

The correction value calculation part 45 calculates the correction value D6, based on the estimation result D5 outputted from the estimation part 44 (Step S9). This correction value D6 is a control value for fine adjustment of the ejection position of ink droplets onto the base material 9. The correction value calculation part 45 sets the correction value D6 in a direction for canceling the expansion/contraction state of the base material 9 indicated by the estimation result D5. For example, if a portion of the base material 9 is estimated to be displaced toward one side in the width direction thereof due to the expansion and contraction of the base material 9, the correction value calculation part 45 calculates the correction value D6 so that the ejection position of ink droplets is corrected toward the other side in the width direction. Then, the correction value calculation part 45 inputs the calculated correction value D6 to the operation control part 46.

Thereafter, the operation control part 46 controls the operations of the transport mechanism 10 and the four heads 21 to 24, based on the submitted data D1 acquired from the data acquisition part 41 and the correction value D6 acquired from the correction value calculation part 45. In this process, the operation control part 46 corrects the ink ejection position specified by the submitted data D1 in accordance with the correction value D6. This correction is made, for example, for each pixel of the submitted data D1. Then, ink droplets are ejected at the corrected ejection position on the printing surface of the base material 9. Thus, the submitted data D1 is printed on the printing surface of the base material 9 (Step S10; a printing step).

As described above, the printing apparatus 1 estimates the expansion/contraction state of the base material 9 resulting from inks, based on the submitted data D1, prior to the printing of the submitted data D1. Thus, the printing apparatus 1 is capable of ejecting ink droplets onto the printing surface of the base material 9 while correcting the ink ejection position in consideration of the estimation result. As a result, the printing apparatus 1 provides high-quality printed products with less distortion of the printed image and with less misregistration.

### <5. Modifications>

While the one preferred embodiment according to the present invention has been described hereinabove, the present invention is not limited to the aforementioned preferred embodiment.

### <5-1. First Modification>

In the aforementioned preferred embodiment, the grid marks 52 are arranged in equally spaced apart relation in the learning data D2. However, the grid marks 52 need not necessarily be equally spaced apart from each other. For example, the grid marks 52 may be arranged more densely in a portion of the image 51 where a change in density value or in coverage rate is larger than in other portions thereof.

### <5-2. Second Modification>

In the aforementioned preferred embodiment, each of the grid marks 52 is comprised of the white base figure 521 and the black mark figure 522. However, the color of the base figure 521 is not necessarily limited to white. Also, the color of the mark figure 522 is not necessarily limited to black. For example, the base figure 521 may be black and the mark figure 522 may be white. The base figure 521 and the mark figure 522 may also be of other colors. It is only necessary that each of the grid marks 52 is comprised of the base figure 521 of a first color and the mark figure 522 of a second color different from the first color. In addition, the shapes of the base figure 521 and the mark figure 522 may be different from those of the aforementioned preferred embodiment.

### <5-3. Third Modification>

In the aforementioned preferred embodiment, the only information inputted to the estimation model M in the learning process is the learning data D2. However, additional information such as detected values from various sensors in the printing apparatus 1 and the type of the base material 9 in addition to the learning data D2 may be inputted to the estimation model M. In that case, the aforementioned additional information in addition to the submitted data D1 may be inputted to the estimation model M in the printing process. This allows the estimation model M to output the estimation result D5 with higher accuracy in consideration of the additional information.

### <5-4. Fourth Modification>

In the aforementioned preferred embodiment, the expansion/contraction state of the base material 9 is estimated based on the estimation model M generated by machine learning. However, the expansion/contraction state of the base material 9 may be estimated by other methods. For example, a relationship between the density value or coverage rate of each region included in the submitted data D1 and the expansion/contraction state of the base material 9 may be formulated. Also, a correspondence relationship between the density value or coverage rate of each region included in the submitted data D1 and the expansion/contraction state of the base material 9 may be specified using a table. Then, prior to the printing of the submitted data D1, an estimation result indicating the expansion/contraction state of the base material 9 may be outputted based on the submitted data D1 and the aforementioned formula or table.

If the formula or table is used, it is necessary to modify the formula or table each time the state of the printing apparatus 1 or the type of the base material 9 is changed. This process of modifying the formula or table places a heavy burden on a user because consideration is required from various viewpoints. On the other hand, the use of machine learning as in the aforementioned preferred embodiment allows the estimation model M to be re-created by performing a certain learning process even when the state of the printing apparatus 1 or the type of the base material 9 is changed. Thus, the aforementioned preferred embodiment is capable of easily responding to changes in conditions.

### <5-5. Other Modifications>

In the aforementioned preferred embodiment, the nozzles 201 are arranged in a line in the width direction in each of the heads 21 to 24. However, the nozzles 201 may be arranged in two or more lines in each of the heads 21 to 24 as shown in Fig. 2.

The printing apparatus 1 of the aforementioned preferred embodiment includes the four heads 21 to 24. However, the number of heads in the printing apparatus 1 may be in the range of one to three or not less than five. For example, the printing apparatus 1 may include a head for ejecting ink of a spot color in addition to those for K, C, M and Y.

The components described in the aforementioned preferred embodiment and in the modifications may be consistently combined together, as appropriate.

While the invention has been shown and described in detail, the foregoing description is in all aspects illustrative and not restrictive. It is therefore understood that the invention is defined by the claims.

## Claims

1. A method of estimating the expansion/contraction state of a web-like base material (9) in a printing apparatus (1) that ejects ink onto a surface of the base material (9) while transporting the base material (9) in a longitudinal direction thereof, the method comprising the steps of:
a) acquiring submitted data (D1) that is image data to be printed; and
b) outputting an estimation result (D5) based on said submitted data (D1) indicating the expansion/contraction state of the base material (9) resulting from ink when said submitted data (D1) is printed, prior to printing of said submitted data (D1), **characterized in that**
said estimation result (D5) is obtained by estimating a distribution of amounts of expansion/contraction on said base material (9).

2. The method according to claim 1, further comprising the step of
c) generating an estimation model (M) that is able to estimate the expansion/contraction state of said base material (9) by means of machine learning using learning data (D2) that is image data for learning as an input variable and the expansion/contraction state (D4) of said base material (9) at the time of printing of said learning data (D2) in said printing apparatus (1) as teacher data,
wherein said submitted data (D1) is inputted to said estimation model (M), and the expansion/contraction state outputted from said estimation model (M) is used as said estimation result (D5) in said step b), and
said expansion/contraction state (D4) is obtained by measuring a distribution of the amounts of expansion/contraction on said base material (9).

3. The method according to claim 2,
wherein said learning data (D2) is image data in which a plurality of marks (52) arranged in spaced apart relation are incorporated, and
wherein the expansion/contraction state (D4) that becomes said teacher data is measured in said step c) based on the positions of said marks (52) on said base material (9) at the time of printing of said learning data (D2) in said printing apparatus (1).

4. The method according to claim 3,
wherein each of said marks (52) includes:
a base figure (521) of a first color; and
a mark figure (522) of a second color different from said first color, said mark figure (522) being in a position overlaid on said base figure (521).

5. The method according to claim 4,
wherein said first color is white, and said second color is black.

6. The method according to any one of claims 3 to 5,
wherein said teacher data indicates a change in distance between adjacent ones of said marks (52).

7. The method according to any one of claims 3 to 5,
wherein said teacher data indicates the amount of displacement of each of said marks (52).

8. The method according to any one of claims 2 to 7,
wherein said learning data (D2) is image data including a plurality of regions different in density value or coverage rate.

9. A method of printing using the estimation method as recited in any one of claims 1 to 8, further comprising the step of
d) ejecting ink onto the surface of said base material (9) while correcting the ejection position of ink onto said base material (9), based on said estimation result (D5), said step d) being performed after said steps a) and b).

10. A printing apparatus (1) comprising:
a data acquisition part (41) for acquiring submitted data (D1) that is image data to be printed;
a transport mechanism (10) for transporting a web-like base material (9) along a predetermined transport path in a longitudinal direction thereof;
a head (21-24) for ejecting ink onto a surface of said base material (9) being transported by said transport mechanism (10), based on said submitted data (D1); and
an estimation part (44) for outputting an estimation result (D5) based on said submitted data (D1) indicating the expansion/contraction state of the base material (9) resulting from said ink when said submitted data (D1) is printed, prior to printing of said submitted data (D1), **characterized in that**
said estimation result (D5) is obtained by estimating a distribution of amounts of expansion/contraction on said base material (9).

11. The printing apparatus (1) according to claim 10, further comprising:
a camera (30) for photographing a printing surface of the base material (9) in a position downstream from said head (21-24) along said transport path;
an expansion/contraction state measurement part (42) for measuring the expansion/contraction state (D4) of said base material (9), based on a photographic image (D3) from said camera (30); and
a learning part (43) for generating an estimation model (M) that is able to estimate the expansion/contraction state of said base material (9) by means of machine learning using learning data (D2) that is image data for learning as an input variable and the expansion/contraction state (D4) at the time of printing of said learning data (D2) as teacher data,
wherein said estimation part (44) inputs said submitted data (D1) to said estimation model (M), and uses the expansion/contraction state outputted from said estimation model (M) as said estimation result (D5), and
said expansion/contraction state (D4) is obtained by measuring a distribution of the amounts of expansion/contraction on said base material (9).

12. The printing apparatus (1) according to claim 10 or 11, further comprising:
a correction value calculation part (45) for calculating a correction value (D6), based on said estimation result (D5); and
an operation control part (46) for controlling said transport mechanism (10) and said head (21-24) so as to eject said ink onto the surface of said base material (9) while correcting the ejection position of said ink onto said base material (9), based on said correction value (D6).

## Patentansprüche

1. Verfahren zum Abschätzen des Expansions-/Kontraktionszustands eines netzartigen Basismaterials (9) in einer Druckvorrichtung (1), die Tinte auf eine Oberfläche des Basismaterials (9) ausstößt, während sie das Basismaterial (9) in einer Längsrichtung desselben transportiert, wobei Verfahren die Schritte umfasst:
a) Erfassen übermittelter Daten (D1), die zu druckende Bilddaten sind; und
b) Ausgeben eines Abschätzergebnisses (D5) basierend auf den übermittelten Daten (D1), das den Ausdehnungs-/Kontraktionszustand des Basismaterials (9) anzeigt, der sich aus der Tinte ergibt, wenn die übermittelten Daten (D1) gedruckt werden, vor dem Drucken der übermittelten Daten (D1), **dadurch gekennzeichnet, dass**
das Abschätzergebnis (D5) durch Abschätzen einer Verteilung von Ausdehnungs-/Kontraktionsbeträgen auf dem Basismaterial (9) erhalten wird.

2. Verfahren gemäß Anspruch 1, ferner umfassend den Schritt
c) Generieren eines Abschätzmodells (M), das den Ausdehnungs-/Kontraktionszustand des Basismaterials (9) mittels maschinellen Lernens unter Verwendung von Lerndaten (D2) abschätzen kann, die Bilddaten zum Lernen als eine Eingangsvariable und der Ausdehnungs-/Kontraktionszustand (D4) des Basismaterials (9) zum Zeitpunkt des Druckens der Lerndaten (D2) in der Druckvorrichtung (1) als Lehrerdaten sind,
wobei die übermittelten Daten (D1) in das Abschätzmodell (M) eingegeben werden und der von dem Abschätzmodelll (M) ausgegebene Expansions- /Kontraktionszustand als das Abschätzergebnis (D5) in dem Schritt b) verwendet wird, und
der Ausdehnungs-/Kontraktionszustand (D4) durch Messen einer Verteilung der Ausdehnungs-/Kontraktionsbeträge auf dem Basismaterial (9) erhalten wird.

3. Verfahren gemäß Anspruch 2,
wobei die Lerndaten (D2) Bilddaten sind, in denen eine Vielzahl von beabstandet angeordneten Markierungen (52) enthalten sind, und
wobei der Ausdehnungs-/Kontraktionszustand (D4), der zu den Lehrerdaten wird, in dem Schritt c) basierend auf den Positionen der Markierungen (52) auf dem Basismaterial (9) zum Zeitpunkt des Druckens der Lerndaten (D2) in der Druckvorrichtung (1) gemessen wird.

4. Verfahren gemäß Anspruch 3,
wobei jede der Markierungen (52) umfasst:
eine Basisfigur (521) einer ersten Farbe; und
eine Markierungsfigur (522) einer zweiten Farbe, die sich von der ersten Farbe unterscheidet, wobei sich die Markierungsfigur (522) in einer Position befindet, die die Basisfigur (521) überlagert.

5. Verfahren gemäß Anspruch 4,
wobei die erste Farbe weiß ist und die zweite Farbe schwarz ist.

6. Verfahren gemäß einem der Ansprüche 3 bis 5,
wobei die Lehrerdaten eine Änderung des Abstands zwischen benachbarten Markierungen (52) anzeigen.

7. Verfahren gemäß einem der Ansprüche 3 bis 5,
wobei die Lehrerdaten den Betrag der Verschiebung jeder der Markierungen (52) anzeigen.

8. Verfahren gemäß einem der Ansprüche 2 bis 7,
wobei die Lerndaten (D2) Bilddaten sind, die eine Vielzahl von Bereichen mit unterschiedlichem Dichtewert oder Deckungsgrad enthalten.

9. Verfahren zum Drucken unter Verwendung des Abschätzverfahrens gemäß einem der Ansprüche 1 bis 8, ferner umfassend den folgenden Schritt
d) Ausstoßen von Tinte auf die Oberfläche des Basismaterials (9), während die Ausstoßposition der Tinte auf das Basismaterial (9) basierend auf dem Abschätzergebnis (D5) korrigiert wird, wobei der Schritt d) nach den Schritten a) und b) durchgeführt wird.

10. Druckvorrichtung (1) umfassend:
einen Datenerfassungsteil (41) zum Erfassen von übermittelten Daten (D1), die zu druckende Bilddaten sind;
einen Transportmechanismus (10) zum Transportieren eines netzartigen Basismaterials (9) entlang eines vorbestimmten Transportweges in einer Längsrichtung desselben;
einen Kopf (21-24) zum Ausstoßen von Tinte auf eine Oberfläche des Basismaterials (9), das von dem Transportmechanismus (10) transportiert wird, basierend auf den übermittelten Daten (D1), und
einen Abschätzteil (44) zum Ausgeben eines Abschätzergebnisses (D5) basierend auf den übermittelten Daten (D1), das den Ausdehnungs-/Kontraktionszustand des Basismaterials (9) anzeigt, der sich aus der Tine ergibt, wenn die übermittelten Daten (D1) gedruckt werden, vor dem Drucken der übermittelten Daten (D1), **dadurch gekennzeichnet, dass**
das Abschätzergebnis (D5) durch Abschätzen einer Verteilung von Ausdehnungs-/Kontraktionsbeträgen auf dem Basismaterial (9) erhalten wird.

11. Druckvorrichtung (1) gemäß Anspruch 10, ferner umfassend:
eine Kamera (30) zum Fotografieren einer Druckoberfläche des Basismaterials (9) in einer Position stromabwärts des Kopfes (21-24) entlang des Transportweges;
einen Ausdehnungs-/Kontraktionszustandsmessteil (42) zum Messen des Ausdehnungs-/Kontraktionszustands (D4) des Basismaterials (9), basierend auf einem fotografischen Bild (D3) von der Kamera (30); und
einen Lernteil (43) zum Erzeugen eines Abschätzmodells (M), das den Ausdehnungs-/Kontraktionszustand des Basismaterials (9) mittels maschinellen Lernens unter Verwendung von Lerndaten (D2) abschätzen kann, die Bilddaten zum Lernen als Eingangsvariable und der Ausdehnungs-/Kontraktionszustands (D4) zum Zeitpunkt des Druckens der Lerndaten (D2) als Lehrerdaten sind,
wobei der Abschätzteil (44) die übermittelten Daten (D1) in das Abschätzmodell (M) eingibt und den von dem Abschätzmodell (M) ausgegebenen Expansions- /Kontraktionszustand als das Abschätzergebnis (D5) verwendet, und
der Ausdehnungs-/Kontraktionszustand (D4) durch Messen einer Verteilung der Ausdehnungs-/Kontraktionsbeträge auf dem Basismaterial (9) erhalten wird.

12. Druckvorrichtung (1) gemäß Anspruch 10 oder 11, ferner umfassend:
einen Korrekturwert-Berechnungsteil (45) zum Berechnen eines Korrekturwertes (D6) basierend auf dem Abschätzergebnis (D5); und
einen Betriebssteuerteil (46) zum Steuern des Transportmechanismus (10) und des Kopfes (21-24) derart, dass die Tinte auf die Oberfläche des Basismaterials (9) ausgestoßen wird, während die Ausstoßposition der Tinte auf das Basismaterial (9) basierend auf dem Korrekturwert (D6) korrigiert wird.

## Revendications

1. Méthode d'estimation de l'état d'expansion/de contraction d'un matériau de base (9) en forme de bande dans un appareil d'impression (1) qui éjecte de l'encre sur une surface du matériau de base (9) tout en transportant le matériau de base (9) dans une direction longitudinale de celui-ci, la méthode comprenant les étapes de :
a) acquisition de données soumises (D1) qui sont des données d'image à imprimer ; et
b) émission d'un résultat d'estimation (D5) sur la base desdites données soumises (D1) indiquant l'état d'expansion/de contraction du matériau de base (9) résultant de l'encre lorsque lesdites données soumises (D1) sont imprimées, avant l'impression desdites données soumises (D1), **caractérisée en ce que**
ledit résultat d'estimation (D5) est obtenu en estimant une répartition de quantités d'expansion/de contraction sur ledit matériau de base (9)

2. Méthode selon la revendication 1, comprenant en outre l'étape de
c) génération d'un modèle d'estimation (M) qui est capable d'estimer l'état d'expansion/de contraction dudit matériau de base (9) au moyen de l'apprentissage automatique à l'aide de données d'apprentissage (D2) qui sont des données d'image pour l'apprentissage en tant que variable d'entrée et l'état d'expansion/de contraction (D4) du matériau de base (9) au moment de l'impression desdites données d'apprentissage (D2) dans ledit appareil d'impression (1) en tant que données d'enseignement,
dans laquelle lesdites données soumises (D1) sont entrées dans ledit modèle d'estimation (M), et l'état d'expansion/de contraction émis par ledit modèle d'estimation (M) est utilisé comme ledit résultat d'estimation (D5) à ladite étape b), et
ledit état d'expansion/de contraction (D4) est obtenu en mesurant une répartition des quantités d'expansion/de contraction sur ledit matériau de base (9) .

3. Méthode selon la revendication 2,
dans laquelle lesdites données d'apprentissage (D2) sont des données d'image dans lesquelles une pluralité de marques (52) agencées en relation espacée sont incorporées, et
dans laquelle l'état d'expansion/de contraction (D4) qui devient lesdites données d'enseignement est mesuré à ladite étape c) sur la base des positions desdites marques (52) sur ledit matériau de base (9) au moment de l'impression desdites données d'apprentissage (D2) dans ledit appareil d'impression (1).

4. Méthode selon la revendication 3,
dans laquelle chacune desdites marques (52) comprend :
une figure de base (521) d'une première couleur ; et
une figure de marque (522) d'une seconde couleur différente de ladite première couleur, ladite figure de marque (522) étant dans une position superposée sur ladite figure de base (521).

5. Méthode selon la revendication 4,
dans laquelle la première couleur est le blanc, et la seconde couleur est le noir.

6. Méthode selon l'une quelconque des revendications 3 à 5,
dans laquelle lesdites données d'enseignement indiquent un changement de distance entre les marques adjacentes parmi lesdites marques (52).

7. Méthode selon l'une quelconque des revendications 3 à 5,
dans laquelle lesdites données d'enseignement indiquent la quantité de déplacement de chacune desdites marques (52).

8. Méthode selon l'une quelconque des revendications 2 à 7,
dans laquelle lesdites données d'apprentissage (D2) sont des données d'image comprenant une pluralité de régions différentes en valeur de densité ou en taux de couverture.

9. Méthode d'impression utilisant la méthode d'estimation énoncée dans l'une quelconque des revendications 1 à 8, comprenant en outre l'étape de
d) éjection d'encre sur la surface dudit matériau de base (9) tout en corrigeant la position d'éjection d'encre sur ledit matériau de base (9), sur la base dudit résultat d'estimation (D5), ladite étape d) étant réalisée après lesdites étapes a) et b).

10. Appareil d'impression (1) comprenant :
une partie d'acquisition de données (41) pour acquérir des données soumises (D1) qui sont des données d'image à imprimer ;
un mécanisme de transport (10) pour transporter un matériau de base (9) en forme de bande le long d'un trajet de transport prédéterminé dans une direction longitudinale de celui-ci ;
une tête (21 à 24) pour éjecter de l'encre sur une surface dudit matériau de base (9) étant transportée par ledit mécanisme de transport (10), sur la base desdites données soumises (D1) ; et
une partie d'estimation (44) pour émettre un résultat d'estimation (D5) sur la base desdites données soumises (D1) indiquant l'état d'expansion/de contraction du matériau de base (9) résultant de ladite encre lorsque lesdites données soumises (D1) sont imprimées, avant l'impression desdites données soumises (D1), **caractérisé en ce que**
ledit résultat d'estimation (D5) est obtenu en estimant une répartition de quantités d'expansion/de contraction sur ledit matériau de base (9).

11. Appareil d'impression (1) selon la revendication 10, comprenant en outre :
un appareil photo (30) pour photographier une surface d'impression du matériau de base (9) dans une position en aval de ladite tête (21 à 24) le long dudit trajet de transport ;
une partie de mesure d'état d'expansion/de contraction (42) pour mesurer l'état d'expansion/de contraction (D4) dudit matériau de base (9), sur la base d'une image photographique (D3) provenant dudit appareil photo (30) ; et
une partie d'apprentissage (43) pour générer un modèle d'estimation (M) qui est capable d'estimer l'état d'expansion/de contraction dudit matériau de base (9) au moyen de l'apprentissage automatique à l'aide de données d'apprentissage (D2) qui sont des données d'image pour l'apprentissage en tant que variable d'entrée et l'état d'expansion/de contraction (D4) au moment de l'impression desdites données d'apprentissage (D2) en tant que données d'enseignement,
dans lequel ladite partie d'estimation (44) entre lesdites données soumises (D1) dans ledit modèle d'estimation (M) et utilise l'état d'expansion/de contraction émis par ledit modèle d'estimation (M) comme résultat d'estimation (D5), et
ledit état d'expansion/de contraction (D4) est obtenu en mesurant une répartition des quantités d'expansion/de contraction sur ledit matériau de base (9) .

12. Appareil d'impression (1) selon la revendication 10 ou 11, comprenant en outre :
une partie de calcul de valeur de correction (45) pour calculer une valeur de correction (D6), sur la base dudit résultat d'estimation (D5) ; et
une partie de commande de fonctionnement (46) pour commander ledit mécanisme de transport (10) et ladite tête (21 à 24) de manière à éjecter ladite encre sur la surface dudit matériau de base (9) tout en corrigeant la position d'éjection de ladite encre sur ledit matériau de base (9), sur la base de ladite valeur de correction (D6) .
